# EUROPÄISCHE PATENTSCHRIFT

(11) **EP 3 861 626 B1**
(45) Veröffentlichungstag und Bekanntmachung des Hinweises auf die Patenterteilung: **02.12.2026**
(21) Anmeldenummer: 18782436.2
(22) Anmeldetag: 04.10.2018
(51) Int. Cl.: B60K 1/00, H02K 7/116, H02K 5/20, H02K 9/22, H02K 9/19, B60K 6/52

(54) **ELEKTROANTRIEB MIT KÜHLUNG**
ELECTRIC DRIVE WITH COOLING CAPABILITY
ENTRAÎNEMENT ÉLECTRIQUE À REFROIDISSEMENT

(43) Veröffentlichungstag der Anmeldung: 11.08.2021
(73) Patentinhaber: GKN Automotive Limited, Birmingham, West Midlands B37 7YE (GB)
(72) Erfinder: ABSENGER, Marc, 42285 Wuppertal (DE); RUPP, Waldemar, 50931 Köln (DE); BESGEN, Mario, 50737 Köln (DE); EICHHOLZ, Dominic, 53359 Rheinbach (DE); SANDER, Tobias, 50859 Köln (DE); SCHMEINK, Hans-Joachim, 53797 Lohmar (DE); ZAERS, Colin, 53639 Königswinter (Rauschendorf) (DE)
(74) Vertreter: Neumann Müller Oberwalleney Patentanwälte PartG mbB
(86) Internationale Anmeldenummer: PCT/EP2018/077011
(87) Internationale Veröffentlichungsnummer: WO 2020/069744

(56) Entgegenhaltungen:
- CN-U- 204 271 815
- DE-A1- 102013 225 862
- US-A1- 2010 320 849
- US-A1- 2018 236 861

## Beschreibung

Die Erfindung betrifft einen Elektroantrieb zum Antreiben eines Kraftfahrzeugs. Ein Elektroantrieb kann als alleiniger Antrieb für das Kraftfahrzeug dienen oder zusätzlich zu einem Verbrennungsmotor vorgesehen sein, wobei der Elektroantrieb und der Verbrennungsmotor jeweils für sich oder gemeinsam überlagert das Kraftfahrzeug antreiben können.

Aus der US 2018/0236861 A1 ist ein gattungsgemäßer Elektroantrieb zum Antreiben eines Kraftfahrzeuges bekannt.

Aus der CN 204271815 U ist eine elektromotorische Antriebseinheit bekannt, umfassend: einen Elektromotor, ein zweistufiges Getriebe und ein Differenzial, die antriebsmäßig miteinander verbunden sind. Die Drehachse einer Motorwelle des Elektromotors sowie die Drehachse von Ausgangsteilen des Differentials sind mit Abstand zueinander angeordnet. Die elektromotorische Antriebseinheit umfasst zudem eine Gehäuseanordnung mit einem getriebeseitigen Gehäusedeckel, einem motorseitigen Gehäusedeckel und einem Gehäuseteil, das zwischen dem getriebeseitigen Gehäusedeckel und dem motorseitigen Gehäusedeckel angeordnet ist. In dem Gehäuseteil sind Kühlwasserkanäle vorgesehen.

Aus der US 2010/320849 A1 ist eine elektromotorische Antriebseinheit bekannt, umfassend: ein Elektromotor mit einer als Hohlwelle ausgestalteten Motorwelle die über ein Planetengetriebe mit einem Differential antriebsmäßig verbunden ist. Die Drehachse der Motorwelle des Elektromotors sowie die Drehachse von Ausgangsrädern des Differentials sind koaxial zueinander angeordnet. Die elektromotorische Antriebseinheit umfasst zudem eine Gehäuseanordnung mit einer motorseitigen Halbschale und einer getriebeseitigen Halbschale, die die miteinander verschraubt sind. In der motorseitigen Halbschale sind Kühlwasserkanäle vorgesehen.

Aus der DE 10 2013 225 862 A1 ist eine Motoreinheit bekannt, umfassend: ein Mantelgehäuse, einen Elektromotor, der in dem Mantelgehäuse angeordnet ist, und ein Motorgehäuse, das zwischen dem Elektromotor und dem Mantelgehäuse angeordnet ist, wobei das Motorgehäuse und das Mantelgehäuse einen Kühlhohlraum eines Kühlmantels begrenzen. Das Motorgehäuse ist topfförmig ausgestaltet, mit einem Mantelabschnitt und einem Bodenabschnitt. Das Motorgehäuse ist über Erweiterungen einzig mit dem Mantelgehäuse verbunden.

Aus der US 8 049 384 B2 ist ein Elektroantrieb mit einem Elektromotor, einem Untersetzungsgetriebe und einem Differentialgetriebe bekannt, die in einem Gehäuse aufgenommen sind. Das Gehäuse umfasst ein erstes Gehäuseteil für den Motor und ein zweites Gehäuseteil für das Getriebe, die über Flanschverbindungen miteinander verbunden sind. Zwischen dem ersten Gehäuseteil und dem Elektromotor ist ein Motorgehäuse angeordnet, wobei zwischen dem ersten Gehäuseteil und dem Motorgehäuse ein Kühlmantel gebildet ist, durch den Kühlmittel zum Abtransport von Wärme fließt. Das Motorgehäuseteil hat einen Verbindungsflansch, der zwischen dem ersten und zweiten Gehäuseteil fixiert ist.

Aus der WO 2016 066215 A1 ist ein Elektroantrieb mit einem Elektromotor, einem Untersetzungsgetriebe und einem Differentialgetriebe bekannt, die in einer Gehäuseanordnung aufgenommen sind. Der Elektromotor hat eine drehend antreibbare Hohlwelle mit einem Antriebsrad, das eine Getriebewelle des Untersetzungsgetriebes drehend antreibt. Eine Ausgangswelle des Differentialgetriebes erstreckt sich durch die Hohlwelle hindurch, wobei zwischen der Hohlwelle und der Ausgangswelle ein Ringkanal gebildet ist. Die Gehäuseanordnung weist eine Schmiermittelleitgeometrie aufweist, die ausgestaltet ist, um Schmiermittel zur getriebeseitigen Mündung des Ringkanals zu leiten, so dass das Schmiermittel durch den Ringkanal zum anderen Ende des Elektromotors fließen kann.

Aus der WO 2015058788 A1 ist eine Getriebeanordnung für einen Elektroantrieb bekannt. Die Getriebeanordnung umfasst ein Getriebegehäuse, mehrere Zahnräder und eine Schmiermittelfüllung. Die Gehäuseanordnung umfasst ein erstes Reservoir, das oberhalb des Schmiermittelpegels angeordnet ist und bei Antrieb der Getriebeanordnung durch Rotation eines ersten Zahnrads mit Schmiermittel befüllbar ist, und ein zweites Reservoir, das oberhalb des Schmiermittelpegels angeordnet ist und bei Antrieb der Getriebeanordnung durch Rotation des zweiten Zahnrads mit Schmiermittel befüllbar ist.

Ein zentrales Thema im Zusammenhang mit Elektroantrieben ist das thermische Verhalten. Sowohl die elektrische Maschine als auch das Getriebe erzeugen Wärme, die abgeführt werden muss, um unzulässig hohe Temperaturen zu vermeiden und damit eine lange Lebensdauer zu gewährleisten. Dabei muss das elektrische Antriebssystem verschiedenen Fahrbedingungen dauerhaft standhalten. Dies gilt insbesondere für Fahrsituationen mit niedrigtourigem Betrieb mit mittlerem oder hohem Drehmoment, für Fahrsituationen mit auch längeren Steigungen mit für Geländefahrzeugen typischen Betriebswinkeln sowie für Hochgeschwindigkeitsfahrsituationen, bei denen das Fahrzeug vom Verbrennungsmotor über einen längeren Zeitraum mit Höchstgeschwindigkeit gefahren wird.

Die Versorgung aller drehenden Bauteile eines Getriebes mit Schmiermittel gestaltet sich häufig als problematisch. Es muss ein hohes statisches Ölniveau eingestellt werden, um eine hinreichende Schmierung und Kühlung an oben liegenden Wellen und Lagern zu gewährleisten. Hierdurch ergeben sich hohe Planschverluste, was wiederum zu einer erhöhten Wärmebildung durch eine verhältnismäßig große im Umlauf befindliche Ölmenge führt.

Der vorliegenden Erfindung liegt die Aufgabe zugrunde, einen Elektroantrieb mit elektrischer Maschine und Getriebeeinheit vorzuschlagen, der eine zuverlässige Kühlung und Schmierung rotierender Antriebsteile gewährleistet und damit eine lange Lebensdauer aufweist.

Zur Lösung wird ein Elektroantrieb zum Antreiben eines Kraftfahrzeugs vorgeschlagen, umfassend: eine Gehäuseanordnung; eine elektrische Maschine mit einer als Hohlwelle ausgebildeten Motorwelle, die von der elektrischen Maschine um eine Drehachse drehend antreibbar ist; eine Planeteneinheit mit einem Sonnenrad, einem Hohlrad, mehreren Planetenrädern sowie einem Planetenträger, wobei das Sonnenrad von der Hohlwelle um die Drehachse drehend antreibbar ist, und das Hohlrad in der Gehäuseanordnung drehfest gehalten ist, eine Leistungsverzweigungseinheit mit einem Eingangsteil und zwei Ausgangsteilen, wobei das Eingangsteil mit dem Planetenträger verbunden ist und gemeinsam mit diesem um die Drehachse rotiert, und wobei eines der zwei Ausgangsteile mit einer Zwischenwelle verbunden ist, die sich durch die Hohlwelle der elektrischen Maschine hindurch erstreckt; wobei die Gehäuseanordnung ein motorseitiges erstes Gehäuseteil, ein getriebeseitiges zweites Gehäuseteil, und ein Zwischengehäuseteil, das zwischen dem ersten Gehäuseteil und dem zweiten Gehäuseteil angeordnet ist, aufweist, wobei das Zwischengehäuseteil eine Zwischenwand aufweist, die einen Motorraum und einen Getrieberaum räumlich voneinander trennt, wobei in dem Getrieberaum ein Schmiermittel enthalten ist; wobei das Zwischengehäuseteil, einstückig mit der Zwischenwand geformt, einen motorseitigen Mantelabschnitt, der sich von der Zwischenwand aus axial in den äußeren Mantelabschnitt des ersten Gehäuseteils hinein erstreckt, und einen getriebeseitigen Mantelabschnitt, der sich von der Zwischenwand aus axial in Richtung zum zweiten Gehäuseteil erstreckt und mit diesem zumindest mittelbar verbunden ist, aufweist, wobei zwischen der Außenfläche des motorseitigen Mantelabschnitts und der Innenfläche des ersten Gehäuseteils ein abgedichteter Hohlraum für ein durchströmendes Kühlmittel gebildet ist, wobei sich der getriebeseitige Mantelabschnitt des Zwischengehäuseteils axial über eine Eingriffsebene hinaus erstreckt, in der das Sonnenrad mit den Planetenrädern in Verzahnungseingriff ist, so dass das Zwischengehäuseteil eine thermische Brücke zwischen Getriebeeinheit und Motoreinheit bildet.

Der Elektroantrieb wird in vorteilhafter Weise zuverlässig geschmiert und gekühlt, beziehungsweise unzulässig hohe Temperaturen werden vermieden. Das Zwischengehäuseteil bildet eine thermische Brücke zwischen dem Motorabschnitt und dem Getriebeabschnitt des Elektroantriebs. Das Zwischengehäuseteil erfüllt dabei zwei Funktionen, nämlich es bildet einen Teil des Getriebegehäuses und gleichzeitig einen Teil des Motorgehäuses der elektrischen Maschine. So ist die Anzahl der Schnittstellen der Gehäuseanordnung insgesamt gering, was sich neben eines günstigen thermischen Verhaltens auch günstig auf Baugröße und Gewicht auswirkt. Die getriebeseitigen Abschnitte des Zwischengehäuseteils nehmen Wärme aus dem Schmiermittel des Getriebes auf, wobei die Wärme durch die Einstückigkeit des Zwischengehäuseteils an den motorseitigen Mantelabschnitt übertragen wird. Der motorseitige Mantelabschnitt des Zwischengehäuseteils ist innerhalb des Mantelabschnitts des ersten Gehäuseteils angeordnet. Auf diese Weise kann der Zwischengehäuse-Mantelabschnitt besonders effektiv vom Elektromotor bei Betrieb entstehende Wärme aufnehmen und an das durch den Hohlraum strömende Motor-Kühlmittel abgeben. Die Kühlung des Mantels der elektrischen Maschine kann mit üblichem Kühlmittel, wie Wasser oder einem Wasser-Glykol-Gemisch erfolgen. Der zwischen Außenmantel und Innenmantel gebildete Hohlraum kann beispielsweise eine mäanderförmige oder schraubenförmigen Leitungsstruktur haben, so dass eine große Wärmemenge abtransportiert werden kann. Das Zwischengehäuseteil kann direkt mit dem zweiten Gehäuseteil verbunden sein, beispielsweise mittels einer Flanschverbindung, oder auch mittelbar über ein weiteres zwischengeschaltetes Gehäuseteil.

Dadurch, dass sich das Zwischengehäuseteil axial weit in den Überdeckungsbereich mit dem Getriebe erstreckt, wird auch das im Getriebe zirkulierende Schmiermittel, das gegen die Zwischenwand und den getriebeseitigen Mantelabschnitt spritzt, bei Betrieb effektiv gekühlt. Dabei nimmt das Zwischengehäuseteil an der Zwischenwand und dem Mantelabschnitt von dem hiermit in Kontakt kommenden Getriebeschmiermittel Wärme auf, welche dann über den motorseitigen Mantelabschnitt an die Motorkühlung abgeführt wird. Es wird insgesamt ein Elektroantrieb mit besonders effektiver Kühlung bei kompakter Bauweise zur Verfügung gestellt, der entsprechend eine lange Lebensdauer aufweist. Ein weiterer Vorteil beim Start des Elektroantriebs ist, dass das Schmiermittel für das Getriebe durch den Kontakt mit der sich durch den Elektromotor schnell erwärmenden Zwischenwand und dem Getriebemantelabschnitt sehr schnell auf Betriebstemperatur kommt. Dies wirkt sich günstig auf den Wirkungsgrad des Elektroantriebs aus. Als Werkstoff für zumindest eines, mehrere oder alle der Gehäuseteile kann beispielsweise Metall beziehungsweise eine Legierung aus metallischem Material verwendet werden, insbesondere ein Leichtmetall, wie beispielsweise Aludruckguss, ohne hierauf eingeschränkt zu sein.

Eine besonders gute Wärmeabfuhr aus dem Getriebe-Schmiermittel ergibt sich bei möglichst großer Oberfläche des getriebeseitigen Zwischengehäuseteils. Vorzugsweise bildet die innere Oberfläche des Zwischengehäuseteils, die bei Betrieb mit dem Getriebe-Schmiermittel in Kontakt kommt, mindestens 30 % der gesamten inneren Oberfläche des die Getriebekammer umgebenden Gehäuseabschnitts, in dem das Schmiermittel aufgenommen ist, insbesondere mindestens 40 %, gegebenenfalls auch 50 % oder mehr der gesamten inneren Getriebekammer-Oberfläche.

Erfindungsgemäss erstreckt sich der getriebeseitige Mantelabschnitt des Zwischengehäuseteils axial über eine Eingriffsebene hinaus, in der das Sonnenrad mit den Planetenrädern in Verzahnungseingriff ist. Hierdurch wird erreicht, dass das durch die Rotation des Planetenträgers sowie der darin drehbar gelagerten Planetenräder in der Verzahnungsebene mit dem Antriebsrad umherspritzendes Schmiermittel gegen den Mantelabschnitt des gekühlten Zwischengehäuseteils geschleudert wird und dort schnell und effektiv Wärme abgeben kann. Insbesondere kann die axiale Länge des getriebeseitigen Mantelabschnitts mindestens das 0,15-fache, insbesondere mindestens das 0,2-fache der axialen Länge des motorseitigen Mantelabschnitts betragen. Damit ragt der getriebeseitige Mantelabschnitt besonders weit über den Planetenträger, so dass Oberfläche, über die der Mantelabschnitt mit Schmiermittel in Kontakt kommt und entsprechend Wärme abführen kann, entsprechend groß ist.

Nach einer Ausführungsform kann das Zwischengehäuseteil in einer oberen Hälfte der Gehäuseanordnung eine Ölfangkammer aufweisen, die zumindest teilweise in axialer Überdeckung mit den Planetenrädern ist. Bei Rotation des Planetenträgers kann von den Planetenrädern umherspritzendes Schmiermittel in der Ölfangkammer temporär gespeichert werden, und über entsprechende Kanäle und/oder Schmiermittelführungen an entfernt liegende Gehäuseabschnitte geführt werden. Die Angabe obere Gehäusehälfte bezieht sich in diesem Kontext auf den Einbauzustand des Elektromotors und beschreibt insbesondere eine Gehäusehälfte die oberhalb einer die Drehachse enthaltenen Horizontalebene des Gehäuses liegt.

Alternativ oder in Ergänzung kann das zweite Gehäuseteil in einer unteren Gehäusehälfte eine Zwischenkammer aufweisen, die oberhalb einer tiefsten Sammelstelle der Getriebekammer liegt. Die Zwischenkammer ist insbesondere so angeordnet und gestaltet, dass bei Betrieb Schmiermittel in diese hinein gelangt und dort temporär gespeichert wird. Auf diese Weise wird der dynamische Schmiermittelpegel, das heißt der Pegel, der sich bei Betrieb des Elektroantriebs einstellt, besonders niedrig gehalten. Hierdurch werden bei Betrieb entstehende Planschverluste gering gehalten, was wiederum in vorteilhafter Weise zu einer verminderten Wärmeentstehung führt.

Nach einer Ausführungsform können der Planetenträger und das Eingangsteil der Leistungsverzweigungseinheit als eine gemeinsame Baueinheit gestaltet sein, die auch als Trägerelement bezeichnet werden kann. Dabei ist insbesondere vorgesehen, dass ein erstes Ende des Trägerelements mittels eines ersten Lagers an dem Zwischengehäuseteil drehbar gelagert ist, und ein zweites Ende des Trägerelements mittels eines zweiten Lagers an dem zweiten Gehäuseteil drehbar gelagert ist. Das Trägerelement kann korbförmig gestaltet sein, wobei sowohl die Planetenräder als auch Teile der Leistungsverzweigungseinheit hierin aufgenommen sein können. Das Trägerelement kann nach einer ersten Möglichkeit einteilig hergestellt sein, beispielsweise durch einen Umformprozess wie Sintern, oder nach einer zweiten Möglichkeit aus mehreren separaten Teilen, die nachträglich miteinander verbunden werden, beispielsweise mittels Schweiß- oder Schraubverbindung. Es kann ein getriebeseitiger Fluidkanal vorgesehen sein, der die Ölfangkammer fluidisch mit dem entfernt liegenden Lager des Trägerelements verbindet.

Nach einer Ausführungsform ist die Zwischenwelle mit ihrem entfernt liegenden Ende mittels eines Lagers in einem Hülsenansatz des ersten Gehäuseteils drehbar gelagert. Dabei ist insbesondere ein Fluidkanal vorgesehen, der die Ölfangkammer fluidisch mit dem Hülsenansatz des ersten Gehäuseteils zur Schmierung des Lagers verbindet. Dieser Kanal kann beispielsweise durch eine Schmiermittelleitung gebildet sein, die außerhalb des Gehäuses zu der gewünschten Lagerstelle am Ende des Gehäuses führt. Dabei ist insbesondere vorgesehen, dass das die der Ölfangkammer zugeordnete Mündung auf einem höheren Niveau liegt, als die der Lagerstelle zugeordneten Mündung, so dass das Schmiermittel allein aufgrund der Gravitation von der Ölfangkammer zur entfernt liegenden Mündung fließen kann.

Vorzugsweise sind sowohl die endseitige Lagerstelle des Getriebeabschnitts als auch die endseitige Lagerstelle des Motorabschnitts mit der Ölfangkammer fluidisch verbunden. Diese Ausgestaltung trägt zu einer zuverlässigen Schmierung auch der entfernt liegenden drehenden und abdichtenden Teile des Elektroantriebs bei.

Die innen liegenden Lagerstellen, das heißt die Lager der Hohlwelle und des Trägerelements an der Zwischenplatte, können mit axialer Überdeckung zueinander angeordnet sein, so dass sich eine kompakte Baugröße ergibt. Dabei kann die Zwischenplatte einen Hülsenansatz aufweisen, wobei das Wellenlager für die Hohlwelle in einem inneren Lagersitz des Hülsenansatzes und das Lager für das Trägerelement auf einem äußeren Lagersitz vorgesehen ist.

Zwischen der Motor-Hohlwelle und der sich hierdurch erstreckenden Zwischenwelle ist ein Ringraum gebildet, durch den das Schmiermittel von den entfernt liegenden Bereichen der Wellenlager für die Zwischenwelle und die Hohlwelle wieder in den Getrieberaum zurückfließen kann. Dabei weist die Hohlwelle vorzugsweise einen ersten Endabschnitt mit einer konischen Innenfläche auf, die sich von einer Ringmündung zwischen Hohlwelle und Zwischenwelle aus in axiale Richtung erweitert. Durch die innenkonische Ausgestaltung der Hohlwelle wird eine Förderwirkung für das Schmiermittel vom Mündungsbereich in die Hohlwelle und innerhalb der Hohlwelle in Richtung Zwischenwand beziehungsweise Getrieberaum erzeugt. Es ergibt sich somit insgesamt ein Schmiermittelkreislauf, durch den alle drehenden und abdichtenden Teile im Elektroantrieb zuverlässig geschmiert und gekühlt werden. Die konische Innenfläche der Hohlwelle kann sich ausgehend von der Ringmündung insbesondere bis hinter das erste Wellenlager erstrecken. Im weiteren Verlauf kann die Hohlwelle auch einen gleichbleibenden Innendurchmesser bis zum entgegengesetzten Endabschnitt aufweisen, an dem das Antriebsrad vorgesehen ist.

Nach einer möglichen Ausgestaltung ist das Sonnenrad mit einem Verbindungsabschnitt in die Hohlwelle eingesteckt und über eine Wellenverzahnung (splines) mit dieser drehfest verbunden. Die Wellenverzahnung wird von dem durchfließenden Schmiermittel geschmiert, so dass Passungskorrosion verhindert wird.

Nach einer Ausführungsform weist die elektrische Maschine einen Stator auf, der drehfest mit dem motorseitigen Mantelabschnitt des Zwischengehäuseteils verbunden ist, insbesondere mit einer Innenumfangsfläche des motorseitigen Mantelabschnitts in Anlagekontakt ist, sowie einen Rotor der mit der Hohlwelle drehfest verbunden ist. Dadurch, dass der Stator der elektrischen Maschine unmittelbar mit dem Mantelabschnitt des Zwischengehäuseteils verbunden ist, kann Wärme besonders effektiv vom Elektromotor in den Mantelabschnitt abgeführt werden, der wiederum durch das Kühlmittel gekühlt wird.

Nach einer möglichen Konkretisierung kann die elektrische Maschine in Form einer Asynchronmaschine gestaltet sein, die auch als Induktionsmaschine bezeichnet wird. Eine Asynchronmaschine hat den Vorteil, dass sie robust sind und einen einfachen Aufbau haben und verhältnismäßig wenig kostet. Sie können bei hohen Drehzahlen und hohen Temperaturen arbeiten. Der Inverter kann bei jeder beliebigen Drehzahl der elektrischen Maschine, das heißt bei beliebiger Fahrzeuggeschwindigkeit abgeschaltet werden. In abgeschaltetem Zustand der Asynchronmaschine liegt keine Spannung mehr an der Spule an, so dass auf eine separate Abschalteinheit wie eine Trennkupplung verzichtet werden kann. Es ist jedoch auch die Verwendung einer Synchronmaschine, das heißt einer permanent erregten elektrischen Maschine möglich, wobei in diesem Fall vorzugsweise eine Trennkupplung im Leistungspfad vorgesehen ist. Das von der elektrischen Maschine maximal erzeugbare Drehmoment kann beispielsweise bei mehr als 200 Nm, insbesondere bei etwa 250 Nm liegen. Die maximale Motordrehzahl kann beispielsweise bei über 12.000 U/min liegen, insbesondere auch über 15.000 U/min.

Nach einer ersten Ausführungsform kann die Leistungsverzweigungseinheit als eine Differentialeinheit gestaltet sein, wobei das mit dem Planetenträger verbundene Eingangsteil als Differentialkorb und die zwei Ausgangsteile als Seitenwellenräder gestaltet sind. Die Differentialeinheit teilt eine eingeleitete Drehbewegung auf die beiden Seitenwellenräder auf, wobei zwischen diesen eine ausgleichende Wirkung besteht.

Nach einer alternativen zweiten Ausführungsform kann die Leistungsverzweigungseinheit als eine Doppelkupplungseinheit gestaltet sein, wobei das mit dem Planetenträger verbundene Eingangsteil als Kupplungskorb und die zwei Ausgangsteile als Kupplungsnaben gestaltet sind. Bei dieser Ausführung können die Kupplungen individuell stufenlos betätigt werden, so dass das jeweils übertragbare Drehmoment nach Bedarf eingestellt werden kann. Diese Funktionalität wird auch als aktive Momentenverteilung beziehungsweise "torque vectoring" bezeichnet.

Nach einer Ausführungsform hat die Planentengetriebeeinheit ein Gesamtübersetzungsverhältnis (i) zwischen 8 und 12, insbesondere zwischen 9 und 11, das heißt die Drehzahl des Planetenträgers beträgt 1/8 bis 1/12 der Drehzahl des Elektromotors.

Nach einer möglichen Konkretisierung können die Planetenräder der Planetengetriebeeinheit als Doppelplanetenräder ausgeführt sein und jeweils eine erste Planetenverzahnung aufweisen, die mit dem Antriebsrad der Hohlwelle in Eingriff ist, und eine zweite Planetenverzahnung, die mit dem Hohlrad in Eingriff ist. Vorzugsweise sind die Verzahnungen der Planetenräder jeweils als Schrägverzahnungen gestaltet, und zwar insbesondere derart, dass die vom Sonnenrad auf die erste Planetenverzahnung und die vom Hohlrad auf die zweite Planetenverzahnung wirkenden Axialkräfte entgegengesetzt gerichtet sind. Auf diese Weise sind Reibungsverluste und auf die Lager wirkenden Kräfte gering.

Nach einer Ausführungsform kann das Hohlrad mit dem zweiten Gehäuseteil mittels Schrauben verbunden sein, die axial in das zweite Gehäuseteil eingeschraubt sind. Für ein vermindertes Planschverhalten des im Getrieberaum umspritzten Schmiermittels ist es günstig, wenn die Schraubenköpfe der Schrauben zumindest größtenteils, insbesondere vollständig innerhalb einer Einhüllenden des Hohlrads liegen.

Bevorzugte Ausführungsbeispiele werden nachstehend anhand der Zeichnungsfiguren erläutert. Hierin zeigt:
- Figur 1: eine erfindungsgemäße Elektroantriebsanordnung im Längsschnitt;
- Figur 2: die Elektroantriebsanordnung aus Figur 1 in perspektivischer Ansicht von schräg vorne, teilweise geschnitten;
- Figur 3: die Elektroantriebsanordnung aus Figur 1 in perspektivischer Ansicht von schräg hinten;
- Figur 4: die Elektroantriebsanordnung aus Figur 1 im Querschnitt gemäß Schnittlinie IV-IV aus Figur 1;
- Figur 5: ein Detail der Schmiermittelversorgung der Elektroantriebsanordnung aus Figur 1 in vergrößerter Schnittdarstellung; und
- Figur 6: ein weiteres Detail der Schmiermittelversorgung der Elektroantriebsanordnung aus Figur 1 in vergrößerter Schnittdarstellung.

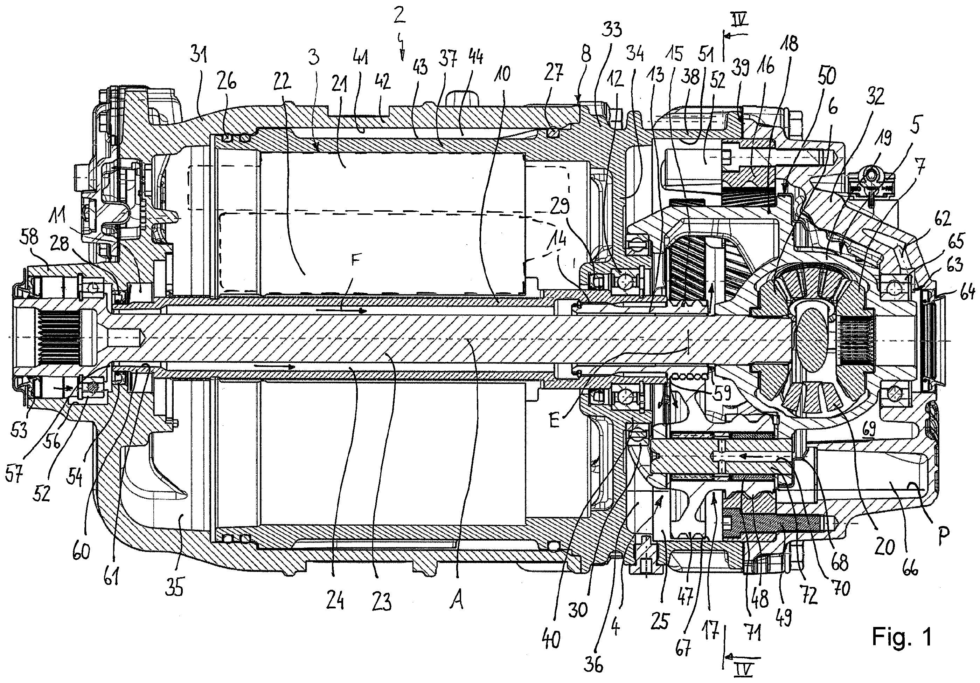

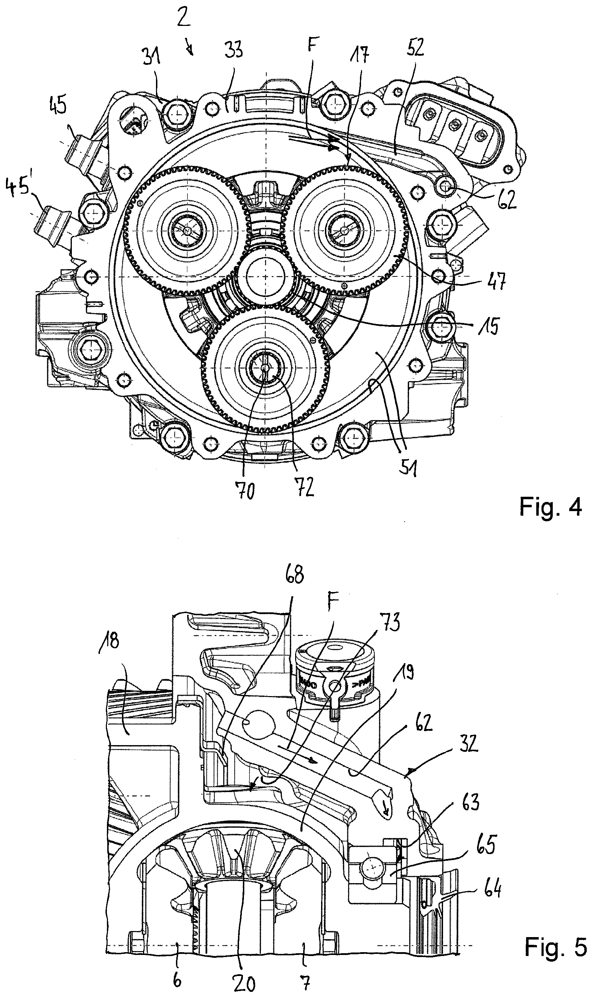

Die Figuren 1 bis 6 werden im Folgenden gemeinsam beschrieben. Es ist eine erfindungsgemäße Elektroantriebsanordnung 2 gezeigt, die auch kurz als Elektroantrieb bezeichnet werden kann. Die Elektroantriebsanordnung 2 umfasst eine elektrische Maschine 3, ein Planetengetriebe 4, das mit der elektrischen Maschine 3 antriebsverbunden ist, und eine Leistungsverzweigungseinheit 5 zum Verteilen einer vom Planetengetriebe 4 eingeleiteten Drehbewegung auf zwei Ausgangsteile 6, 7 der Elektroantriebsanordnung 2. Die elektrische Maschine 3, das Planetengetriebe 4 und die Leistungsverzweigungseinheit 5 sind in einer Gehäuseanordnung 8 aufgenommen, die auch kurz als Gehäuse bezeichnet werden kann.

Die elektrische Maschine 3 dient als Antriebsquelle zum Antreiben einer Antriebsachse eines Kraftfahrzeugs. Die Steuerung der elektrischen Maschine 3 erfolgt mittels einer Leistungselektronik, wie einem Pulswechselrichter, mit integrierter elektronischer Regeleinheit (ECU). Zur Stromversorgung ist die elektrische Maschine 3 mit einer Batterie (nicht dargestellt) zu verbinden. Die elektrische Maschine 3 weist einen Stator 21 auf, der mit dem Gehäuse 8 fest verbunden ist, sowie einen Rotor 22, der mit einer Motorwelle 10 zur Drehmomentübertragung fest verbunden ist. Die elektrische Maschine 3 ist vorliegend in Form einer Asynchronmaschine gestaltet, auch eine Synchronmaschine verwendet werden kann.

Die Motorwelle 10 ist als Hohlwelle gestaltet und mittels eines ersten und zweiten Lagers 11, 12 um die Drehachse A in dem Gehäuse 8 drehbar gelagert und von dem Rotor 9 drehend antreibbar. An ihrem dem Getriebe 4 zugewandten Ende ist ein Antriebsteil 13 vorgesehen, das über eine Wellenverbindung 14 (splines) drehfest mit der Hohlwelle 10 verbunden ist und das zur Übertragung der Drehbewegung auf das Planetengetriebe 4 dient. Das Planetengetriebe 4 umfasst ein Sonnenrad 15, das einteilig mit dem Antriebsteil 13 gestaltet ist, ein Hohlrad 16, das drehfest in dem Gehäuse 8 verbunden ist, mehrere Planetenräder 17 sowie einen Planetenträger 18, an dem die Planetenräder 17 drehbar gelagert sind und gemeinsam mit diesem umlaufen.

Es ist bei der vorliegenden Ausführungsform vorgesehen, dass die Planentengetriebeeinheit 4 ein Gesamtübersetzungsverhältnis i zwischen 9 und 11 aufweist, ohne hierauf eingeschränkt zu sein. Hierfür sind die Planetenräder 17 als Doppelplanetenräder ausgeführt und weisen jeweils eine erste Planetenverzahnung 47, auf, die mit dem Sonnenrad 15 in Eingriff ist, und eine zweite Planetenverzahnung 48, die mit dem Hohlrad 16 in Eingriff ist. Die Verzahnungen 47, 48 der Planetenräder 17 sind jeweils als Schrägverzahnungen gestaltet, sodass die vom Sonnenrad 15 auf die erste Planetenverzahnung 47 und die vom Hohlrad 16 auf die zweite Planetenverzahnung 48 wirkenden Axialkräfte entgegengesetzt gerichtet sind.

Das Hohlrad 16 ist mit einem Gehäuseteil 32 des Gehäuses 8 mittels Schrauben 49 verbunden, die axial in das Gehäuseteil 32 eingeschraubt sind. Dabei hat das Hohlrad 16 im Bereich der Schraubenköpfe Vertiefungen, sodass die Schraubenköpfe in montiertem Zustand etwa bündig mit einer Seitenwand des Hohlrads 16 abschließen. Hierdurch können Planschverluste durch Verwirbelungen im Bereich der Schraubenköpfe verhindert werden.

Der Planetenträger 18 ist fest mit dem Eingangsteil 19 der Leistungsverzweigungseinheit 5 verbunden, so dass beide gemeinsam um die Drehachse A rotieren. Die Leistungsverzweigungseinheit 5 ist vorliegend als eine Differentialgetriebe gestaltet, die einen Differentialkorb als Eingangsteil 19, mehrere gemeinsam mit dem Differentialkorb 19 umlaufende Differentialräder 20 sowie zwei mit den Differentialrädern 20 kämmende Seitenwellenräder als Ausgangsteile 6, 7 aufweist. Die Differentialeinheit 5 teilt eine eingeleitete Drehbewegung auf die beiden Seitenwellenräder 6, 7 auf, wobei zwischen diesen eine ausgleichende Wirkung besteht. Der Planetenträger 18 und der Differentialkorb 19, der auch als Differentialträger bezeichnet werden kann, sind vorliegend einteilig gestaltet, wobei das so gebildete Bauteil gemeinsam auch als Trägerelement 50 bezeichnet wird.

Mit dem einen (6) der beiden Seitenwellenräder 6, 7 ist eine Zwischenwelle 23 drehfest verbunden, um ein Drehmoment auf eine hiermit am anderen Ende zu verbindende Seitenwelle (nicht dargestellt) zu übertragen. Die Zwischenwelle 23 erstreckt sich durch die Hohlwelle 10 hindurch, wobei zwischen den beiden eine Ringraum 24 mit zwei endseitigen Mündungen gebildet ist. Mit dem zweiten Seitenwellenrad 7 wird eine zweite Seitenwelle (nicht dargestellt) zur Drehmomentübertragung auf ein zugehöriges zweites Fahrzeugrad verbunden. Zur Schmierung der rotierenden und dichtenden Teile ist für die das Planeten- und Differentialgetriebe umfassende Getriebeeinheit ein Schmiermittel 25 vorgesehen.

Die vorliegende Elektroantriebsanordnung 2 hat eine besondere Ausgestaltung hinsichtlich der Kühlung und Schmierung, was nachstehend näher erläutert wird.

Die Gehäuseanordnung 8 des Elektroantriebs 2 umfasst ein erstes Gehäuseteil 31, das einen Aufnahmeraum für die elektrische Maschine 3 bildet, ein zweites Gehäuseteil 32, in dem die Getriebeeinheit 4, 5 zumindest teilweise aufgenommen ist, und ein Zwischengehäuseteil 33, das zwischen den beiden endseitigen Gehäuseteilen 31, 32 angeordnet ist. Es ist insbesondere in Figur 1 erkennbar, dass das Zwischengehäuseteil 33 eine Zwischenwand 34 aufweist, die einen Motorraum 35 und einen Getrieberaum 36 räumlich voneinander trennt. Dabei ist der Motorraum 35 trocken, das heißt schmiermittelfrei und nach außen hin mittels entsprechender Dichtungen 26, 27, 28, 29 abgedichtet, während der Getrieberaum 36 mit Schmiermittel 25 befüllt ist.

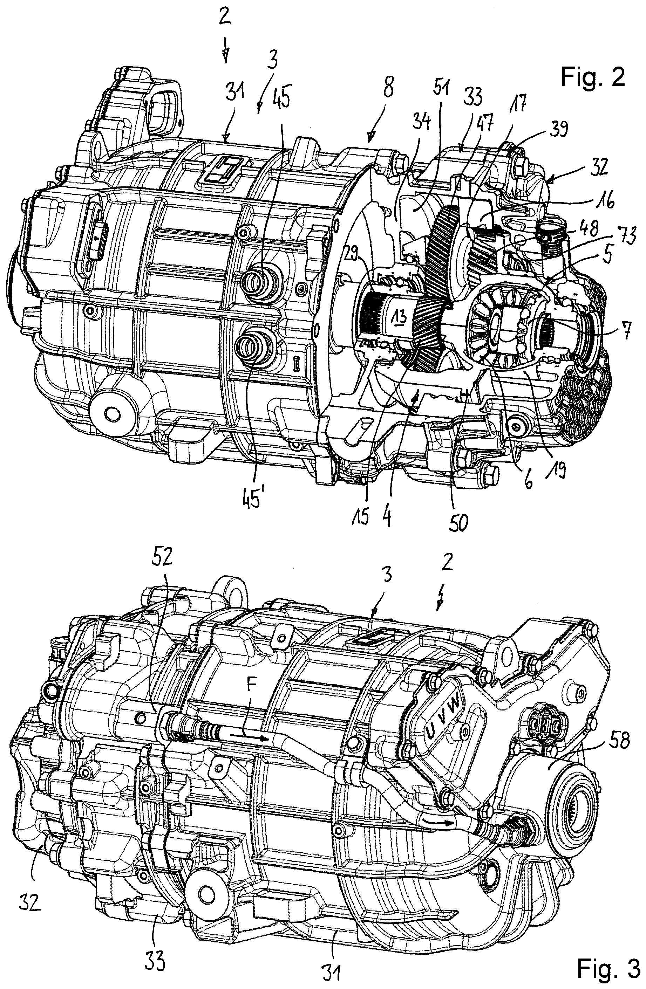

Das Zwischengehäuseteil 33 umfasst einen motorseitigen Mantelabschnitt 37, der sich von der Zwischenwand 34 aus axial in das erste Gehäuseteil 31 hinein erstreckt, und einen getriebeseitigen Mantelabschnitt 38, der sich von der Zwischenwand 34 aus axial in Richtung zum zweiten Gehäuseteil 32 erstreckt und mit diesem über Flanschverbindungen 39 verbunden ist. Dabei sind der motorseitige Mantelabschnitt 37, die Zwischenwand 34 und der getriebeseitige Mantelabschnitt 38 einteilig gestaltet, so dass die genannten Abschnitte thermisch miteinander in Kontakt stehen. Zwischen der Innenfläche 41 des äußeren Mantelabschnitts 42 und der Außenfläche 43 des motorseitigen Mantelabschnitts 37 ist ein abgedichteter, umlaufender Hohlraum 44 für ein durchströmendes Kühlmittel gebildet. Der zwischen Außenmantel 42 und Innenmantel 37 gebildete Hohlraum 44 kann eine die Oberfläche vergrößernde Leitungsstruktur haben, beispielsweise eine mäanderförmige Struktur, so dass eine große Wärmemenge der Mantelteile 42, 37 von dem durchströmenden Kühlmittel aufgenommen und abtransportiert werden kann. Zur Kühlung des Mantels 27, 42 kann ein übliches Kühlmittel, wie ein Wasser-Glykol-Gemisch verwendet werden. In Figur 2 sind die beiden Anschlüsse 45, 45' erkennbar, durch die das Kühlmittel in den Mantel hinein beziehungsweise aus diesem wieder herausgelangt.

Das Zwischengehäuseteil 33 ist insbesondere so gestaltet, dass dessen innere Oberfläche 51, welche die Getriebekammer 36 begrenzt und bei Betrieb mit dem darin umherspritzenden Schmiermittel in Kontakt kommt, mindestens 30 % der gesamten inneren Oberfläche der Getriebekammer 36 ausmacht, vorzugsweise mindestens 40 % der Oberfläche. Es ist insbesondere in Figur 1 erkennbar, dass sich der getriebeseitige Mantelabschnitt 38 des Gehäuseteils 33 axial über die Verzahnungsebene E hinaus erstreckt, in der das Sonnenrad 15 mit den Planetenrädern 17 in Verzahnungseingriff ist. Dabei kann die axiale Länge des getriebeseitigen Mantelabschnitts 38 beispielsweise mindestens das 0,15-fache, insbesondere mindestens das 0,2-fache der axialen Länge des motorseitigen Mantelabschnitts 37 betragen. Auf diese Weise ragt der getriebeseitige Mantelabschnitt besonders weit über den Planetenträger 18, so dass über die innere Oberfläche 51 viel Wärme von dem hiermit in Kontakt tretenden Schmiermittel 25 aufgenommen und über den motorseitigen Mantelabschnitt 37 an das Motor-kühlmittel abgegeben werden kann.

Das Zwischengehäuseteil 33 hat in einer oberen Hälfte des Gehäuses eine Ölfangkammer 52, in der von dem Planetenträger 18 beziehungsweise den Planetenrädern 17 umherspritzendes Kühlmittel 25 temporär gespeichert werden kann. Die Ölfangkammer 52 ist in axialer Überdeckung mit den Planetenrädern 17 angeordnet, so dass bei Rotation des Planetenträgers 18 möglichst viel Schmiermittel in die Kammer 52 gelangt. Die Fließrichtung F des Schmiermittels ist in den Figuren mit Pfeilen eingezeichnet, wobei exemplarisch nur einige der Pfeile mit Bezugszeichen F versehen sind.

Es ist eine passive Schmiermittelversorgung der entfernt liegenden drehenden Lager und Dichtungen vorgesehen. Zur Schmiermittelversorgung der am motorseitigen Ende des Elektroantriebs 2 liegenden Lager 46 und Dichtungen 53, 54 ist eine Schmiermittelleitung 55 von der Ölfangkammer 52 zu einem bodenseitigen Hülsenansatz 58 des ersten Gehäuseteils 31 geführt. Wie insbesondere in Figur 3 erkennbar, ist die Schmiermittelleitung 55 außerhalb des Gehäuses 8 zum Hülsenansatz 58 geführt. Dabei liegt das der Ölfangkammer 52 zugeordnete Ende auf einem höheren Niveau, als das dem Hülsenansatz 58 zugeordnete Ende der Leitung 55, so dass das Schmiermittel 25 aufgrund der Schwerkraft von der Ölfangkammer 52 zur entfernt liegenden Mündung im Hülsenansatz 58 fließen kann. Die Mündung der Schmiermittelleitung 55 ist zwischen dem Wellendichtring 53 und dem Wellenlager 52 angeordnet. Von hier aus gelangt das Schmiermittel 25 über einen Durchtrittsöffnung 56 unterhalb des Lagers 52 in den Mündungsbereich 57 zwischen Hohlwelle 10 und Zwischenwelle 23.

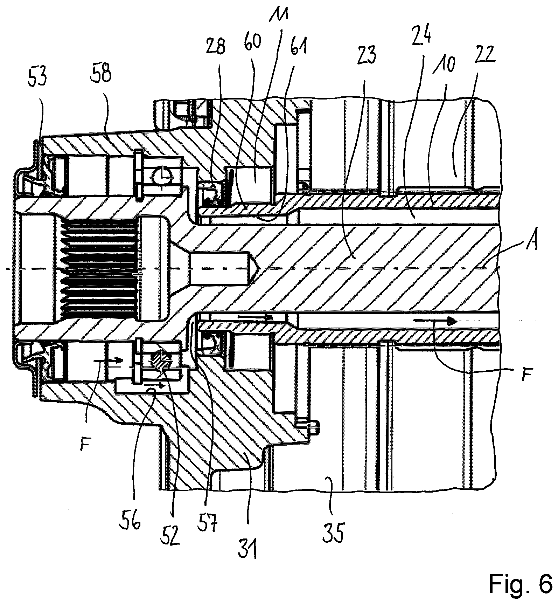

Von der Mündung 57 gelangt das Schmiermittel 25 in den Ringraum 24 und fließt darin zum anderen Ende der Hohlwelle 10, das in der Zwischenwand 34 gelagert ist, und tritt dort in dem Getrieberaum 36 wieder heraus. Wie insbesondere in Figur 6 erkennbar, hat die Hohlwelle 10 an ihrem Endabschnitt 60 eine konische Innenfläche 61, die sich von einer Ringmündung 57 zwischen Hohlwelle 10 und Zwischenwelle 23 aus in axiale Richtung erweitert. Die konische Innenfläche 61 der Hohlwelle 10 bewirkt eine Förderwirkung für das Schmiermittel 25 vom Mündungsbereich 57 in die Hohlwelle und innerhalb der Hohlwelle in Richtung Getrieberaum 36. Dabei passieren zumindest Teilmengen des Schmiermittels 25 die Wellenverzahnung 14 zwischen Hohlwelle 10 und Antriebsteil 13, so dass diese geschmiert und eine Passungskorrosion verhindert wird. An der getriebeseitigen Mündung 59 der Hohlwelle 10 gelangt das Schmiermittel wieder in den Getrieberaum 36, so dass sich insgesamt ein passivier Schmiermittelkreislauf ergibt, durch den alle drehenden und abdichtenden Teile im Elektroantrieb 2 zuverlässig geschmiert und gekühlt werden.

Für die Schmierung der entfernt liegenden Teile der Getriebeeinheit ist ein Fluidkanal 62 vorgesehen sein, der die Ölfangkammer 52 fluidisch mit einem Lager- und Dichtungsabschnitt des zweiten Gehäuseteils 32 verbindet. Dabei ist die Mündung 63 des Fluidkanals 62 axial zwischen dem Lager 64 des Trägerelements 19 und der Wellendichtung 65 angeordnet.

In einer unteren Gehäusehälfte des zweiten Gehäuseteils 32 ist eine Zwischenkammer 66 vorgesehen, in der bei Betrieb des Elektroantriebs 2 Schmiermittel 25 gespeichert wird. Die Zwischenkammer 66 liegt oberhalb einer tiefsten Sammelstelle 67 der Getriebekammer 36. Die Kammer 66 stellt bei Betrieb ein zusätzliches Volumen für das Schmiermittel zur Verfügung, so dass der dynamische Schmiermittelpegel niedrig liegt und Planschverluste gering gehalten werden. Die Schmiermittelmenge ist gering und insbesondere so bemessen, dass der dynamische Schmiermittelpegel P unterhalb der Lager 71 der Planetenräder 17, vorzugsweise etwa im Bereich des Verzahnungseingriffs der kleineren Verzahnungsabschnitte 48 mit dem Hohlrad 16 liegt. Auf diese Weise wird die Temperatur des Schmiermittelsumpfes gering gehalten. Das Schmiermittel kann eine niedrige Viskosität von beispielsweise weniger als 10 mm²/s, insbesondere weniger als 8 mm²/s bei 100°C aufweisen. Dies trägt in vorteilhafter Weise zu geringen Planschverlusten bei.

Am Trägerelement 50 ist ferner ein Leitblech 68 vorgesehen, so dass Schmiermittel 25 vom Raum 69 in Beölungskanäle 70 für die Lagerstellen 71 der Planetenräder 17 gelangen kann, die auf im Trägerelement 50 befestigten Zapfen 72 drehbar gelagert sind. Zur Schmierung der innerhalb des Differentialkorbs 19 liegenden Zahnräder 20, 21 hat das Getriebegehäuse 32 oberhalb des Trägerelements 50 eine Abtropfgeometrie 73 von der Schmiermittel in umfangsverteilte Öffnungen des Differentialträgers 19 abtropfen kann.

Die Zwischenplatte 37 weist Lagerstellen für das Trägerelement 50 und die Hohlwelle 10 auf. Insbesondere weist die Zwischenplatte 37 an einem radial innen liegenden Ende einen Hülsenabschnitt 40 auf, wobei das Wellenlager 12 für die Hohlwelle 10 in einem inneren Lagersitz und das Lager 30 für das Trägerelement 50 auf einem äußeren Lagersitz des Hülsenabschnitt 40 angeordnet sind. Das Trägerelement-Lager 30 und das Wellenlager 12 haben eine teilweise axiale Überdeckung, so dass sich eine kompakte axiale Baugröße ergibt.

Insgesamt hat der Elektroantrieb 2 durch die koaxiale Anordnung von Elektromotor 3 und Getriebeeinheit 4, 5 eine kompakte Bauform. Durch die erfindungsgemässe Ausgestaltung des Gehäuses 8, bei dem das Zwischengehäuseteil 33 eine thermische Brücke zwischen Getriebeeinheit 4, 5 und Motoreinheit bildet, werden eine effiziente Wärmeabfuhr und damit eine lange Lebensdauer des Elektroantriebs gewährleistet. Dabei ist lediglich die beschriebene Statorkühlung des Elektromotors 3 als einziger Wärmetauscher für das Getriebe nötig. Auf eine aktive Kühlung beziehungsweise Schmierung mit extern antreibbarer Pumpe kann verzichtet werden. Diese Konstruktion ermöglicht damit sogar den Einsatz einer induktiven elektrischen Maschine, die höhere Verluste als eine Synchronmaschine erzeugt.

### Bezugszeichenliste

- 2: Elektroantriebsanordnung
- 3: elektrische Maschine
- 4: Planetengetriebe
- 5: Leistungsverzweigungseinheit
- 6: Ausgangsteil
- 7: Ausgangsteil
- 8: Gehäuseanordnung
- 10: Motorwelle
- 11, 12: Lager
- 13: Antriebsteil
- 14: Wellenverbindung
- 15: Sonnenrad
- 16: Hohlrad
- 17: Planetenrad
- 18: Planetenträger
- 19: Eingangsteil / Differentialträger
- 20: Differentialräder
- 21: Stator
- 22: Rotor
- 23: Zwischenwelle
- 24: Ringraum
- 25: Schmiermittel
- 26-29: Dichtung
- 30: Lager
- 31: erstes Gehäuseteil
- 32: zweites Gehäuseteil
- 33: Zwischengehäuseteil
- 34: Zwischenwand
- 35: Motorraum
- 36: Getrieberaum
- 37: erster Mantelabschnitt (33)
- 38: zweiter Mantelabschnitt (33)
- 39: Flanschverbindung
- 40: Hülsenabschnitt
- 41: Innenfläche
- 42: Mantelabschnitt (31)
- 43: Außenfläche
- 44: Hohlraum
- 45, 45': Anschlüsse
- 46: Lager
- 47, 48: Planetenverzahnung
- 49: Schraube
- 50: Trägerelement
- 51: Oberfläche (33)
- 52: Ölfangkammer
- 53, 54: Dichtung
- 55: Schmiermittelleitung
- 56: Durchtrittsöffnung
- 57: Mündungsbereich
- 58: Hülsenansatz
- 59: Mündung
- 60: Endabschnitt
- 61: Innenfläche
- 62: Fluidkanal
- 63: Mündung
- 64: Lager
- 65: Wellendichtung
- 66: Zwischenkammer
- 67: Sammelstelle
- 68: Leitblech
- 69: Raum
- 70: Beölungskanal
- 71: Lagerstelle
- 72: Zapfen
- 73: Abtropfgeometrie
- A: Drehachse
- E: Ebene
- F: Fließrichtung
- P: dynamischer Schmiermittelpegel
- i: Übersetzung

## Patentansprüche

1. Elektroantrieb zum Antreiben eines Kraftfahrzeugs, umfassend:
eine Gehäuseanordnung (8);
eine elektrische Maschine (3) mit einer als Hohlwelle (10) ausgebildeten Motorwelle, die von der elektrischen Maschine (3) um eine Drehachse (A) drehend antreibbar ist;
ein Planetengetriebe (4) mit einem Sonnenrad (15), einem Hohlrad (16), mehreren Planetenrädern (17) sowie einem Planetenträger (18), wobei das Sonnenrad (15) von der Hohlwelle (16) um die Drehachse (A) drehend antreibbar ist, und das Hohlrad (16) in der Gehäuseanordnung (8) drehfest gehalten ist,
eine Leistungsverzweigungseinheit (5) mit einem Eingangsteil (19) und zwei Ausgangsteilen (6, 7),
wobei das Eingangsteil (19) mit dem Planetenträger (18) verbunden ist und gemeinsam mit diesem um die Drehachse (A) rotiert, und
wobei eines der zwei Ausgangsteile (6, 7) mit einer Zwischenwelle (23) verbunden ist, die sich durch die Hohlwelle (10) der elektrischen Maschine (3) hindurch erstreckt;
wobei die Gehäuseanordnung (8) ein motorseitiges erstes Gehäuseteil (31), ein getriebeseitiges zweites Gehäuseteil (32), und ein Zwischengehäuseteil (33) aufweist, das zwischen dem ersten Gehäuseteil (31) und dem zweiten Gehäuseteil (32) angeordnet ist, wobei das Zwischengehäuseteil (33) eine Zwischenwand (34) aufweist, die einen Motorraum (35) und einen Getrieberaum (36) räumlich voneinander trennt, wobei in dem Getrieberaum (36) ein Schmiermittel (25) enthalten ist,
wobei das Zwischengehäuseteil (33), einstückig mit der Zwischenwand (34) geformt, einen motorseitigen Mantelabschnitt (37), der sich von der Zwischenwand (34) aus axial in den äußeren Mantelabschnitt (42) des ersten Gehäuseteils (31) hinein erstreckt, und einen getriebeseitigen Mantelabschnitt (38), der sich von der Zwischenwand (34) aus axial in Richtung zum zweiten Gehäuseteil (32) erstreckt und mit diesem zumindest mittelbar verbunden ist, aufweist, und
wobei zwischen einer Außenfläche (43) des motorseitigen Mantelabschnitts (37) und einer Innenfläche (41) des ersten Gehäuseteils (31) ein abgedichteter Hohlraum (44) für ein durchströmendes Kühlmittel gebildet ist,
**dadurch gekennzeichnet,**
**dass** sich der getriebeseitige Mantelabschnitt (38) des Zwischengehäuseteils (33) axial über eine Eingriffsebene (E) hinaus erstreckt, in der das Sonnenrad (15) mit den Planetenrädern (17) in Verzahnungseingriff ist, wobei das Zwischengehäuseteil (33) eine thermische Brücke zwischen Getriebeeinheit und Motoreinheit bildet.

2. Elektroantrieb nach Anspruch 1,
**dadurch gekennzeichnet,**
**dass** in dem Getrieberaum (36) die innere Oberfläche (51) des Zwischengehäuseteils (33) mindestens 30 % der gesamten inneren Oberfläche des den Getriebraum (36) umgebenden Gehäuseabschnitts bildet.

3. Elektroantrieb nach einem der Ansprüche 1 bis 2,
**dadurch gekennzeichnet,**
**dass** die axiale Länge des getriebeseitigen Mantelabschnitts (38) mindestens das 0,15-fache, insbesondere mindestens das 0,2-fache der axialen Länge des motorseitigen Mantelabschnitts (37) beträgt.

4. Elektroantrieb nach einem der Ansprüche 1 bis 3,
**dadurch gekennzeichnet,**
**dass** das Zwischengehäuseteil (33) in einer oberen Hälfte der Gehäuseanordnung (8) eine Ölfangkammer (52) aufweist, die zumindest teilweise in axialer Überdeckung mit den Planetenrädern (17) ist, wobei bei Rotation des Planetenträgers (18) von den Planetenrädern (17) umherspritzendes Kühlmittel in der Ölfangkammer (52) temporär gespeichert wird.

5. Elektroantrieb nach einem der Ansprüche 1 bis 4,
**dadurch gekennzeichnet,**
**dass** das zweite Gehäuseteil (32) in einer unteren Gehäusehälfte eine Zwischenkammer (66) aufweist, die oberhalb einer tiefsten Sammelstelle (67) des Getrieberaums (36) liegt, wobei bei Betrieb des Elektroantriebs Schmiermittel (25) in der Zwischenkammer (66) temporär gespeichert wird.

6. Elektroantrieb nach Anspruch 4 und optional auch Anspruch 5
**dadurch gekennzeichnet,**
**dass** der Planetenträger (18) und das Eingangsteil (19) der Leistungsverzweigungseinheit (5) fest miteinander verbunden sind und ein Trägerelement (50) bilden, wobei ein erstes Ende des Trägerelements (50) mittels eines ersten Trägerlagers (30) an dem Zwischengehäuseteil (33) drehbar gelagert ist, und ein zweites Ende des Trägerelements (50) mittels eines zweiten Trägerlagers (65) an dem zweiten Gehäuseteil (32) drehbar gelagert ist,
wobei ein getriebeseitiger Fluidkanal (62) vorgesehen ist, der die Ölfangkammer (52) fluidisch mit dem zweiten Trägerlager (65) verbindet.

7. Elektroantrieb nach Anspruch 6,
**dadurch gekennzeichnet,**
**dass** die Zwischenwand (34) einen Hülsenabschnitt (40) mit einem inneren Lagersitz für ein Wellenlager (12) der Hohlwelle (10) und mit einem äußeren Lagersitz für das erste Trägerlager (30) des Trägerelements (50) aufweist, wobei das Wellenlager (12) der Hohlwelle (10) und das erste Trägerlager (30) des Trägerelements (50) einander zumindest teilweise axial überdecken.

8. Elektroantrieb nach Anspruch 4 und optional auch einem der Ansprüche bis 7,
**dadurch gekennzeichnet,**
**dass** die Zwischenwelle (23) mittels eines Lagers (46) in einem Hülsenansatz (58) des ersten Gehäuseteils (31) drehbar gelagert ist,
wobei ein motorseitiger Fluidkanal (55) vorgesehen ist, der die Ölfangkammer (52) fluidisch mit dem Hülsenansatz (58) des ersten Gehäuseteils (31) zur Schmierung des Lagers (46) verbindet.

9. Elektroantrieb nach einem der Ansprüche 1 bis 8,
**dadurch gekennzeichnet,**
**dass** die elektrische Maschine (3) in Form einer Asynchronmaschine gestaltet ist.

10. Elektroantrieb nach einem der Ansprüche 1 bis 9,
**dadurch gekennzeichnet,**
**dass** die Hohlwelle (10) einen ersten Endabschnitt (60) mit einer konischen Innenfläche (61) aufweist, die sich von einer Ringmündung (57) zwischen Hohlwelle (10) und Zwischenwelle (23) aus in axiale Richtung erweitert, wobei sich die konische Innenfläche (61) ausgehend von der Ringmündung (57) insbesondere bis hinter das erste Wellenlager (11) erstreckt.

11. Elektroantrieb nach Anspruch 10,
**dadurch gekennzeichnet,**
**dass** das Sonnenrad (15) einen Verbindungsabschnitt aufweist, der in die Hohlwelle (10) eingesteckt und mittels einer Wellenverzahnung (14) mit dieser drehfest verbunden ist, wobei die Wellenverzahnung (14) von dem durchfließenden Schmiermittel geschmiert wird.

12. Elektroantrieb nach einem der Ansprüche 1 bis 11,
**dadurch gekennzeichnet,**
**dass** die Leistungsverzweigungseinheit (5) als ein Differentialgetriebe gestaltet ist, wobei das mit dem Planetenträger (18) verbundene Eingangsteil (19) als Differentialkorb und die zwei Ausgangsteile (21, 22) als Seitenwellenräder gestaltet sind.

13. Elektroantrieb nach einem der Ansprüche 1 bis 12,
**dadurch gekennzeichnet,**
**dass** die Planetenräder (17) des Planetengetriebes (4) als Doppelplanetenräder ausgeführt sind und jeweils eine erste Planetenverzahnung (47) aufweisen, die mit dem Sonnenrad (15) kämmt, und eine zweite Planetenverzahnung (48), die mit dem Hohlrad (16) kämmt,
wobei die erste Planetenverzahnung (47) und die zweite Planetenverzahnung (48) jeweils als Schrägverzahnungen derart gestaltet sind, dass die vom Sonnenrad (15) auf die erste Planetenverzahnung (47) und die vom Hohlrad (16) auf die zweite Planetenverzahnung (47) wirkenden Axialkräfte entgegengesetzt gerichtet sind.

14. Elektroantrieb nach einem der Ansprüche 1 bis 13,
**dadurch gekennzeichnet,**
**dass** das Hohlrad (16) mit dem zweiten Gehäuseteil (32) mittels Schrauben (49) verbunden ist, die axial in das zweite Gehäuseteil (32) eingeschraubt sind, wobei die Schraubenköpfe der Schrauben (49) zumindest größtenteils, insbesondere vollständig innerhalb einer Axialerstreckung des Hohlrads (16) liegen.

## Claims

1. Electric drive for driving a motor vehicle, comprising:
a housing assembly (8);
an electric machine (3) with a motor shaft in the form of a hollow shaft (10) which is rotatably drivable about an axis of rotation (A) by the electric machine (3);
a planetary gearing (4) with a sun gear (15), a ring gear (16), a plurality of planet gears (17) and a planet carrier (18), wherein the sun gear (15) is rotatably drivable about the axis of rotation (A) by the hollow shaft (16), and the ring gear (16) is arranged in the housing assembly (8) in a rotationally fixed manner,
a power distribution unit (5) with an input part (19) and two output parts (6, 7), wherein the input part (19) is connected to the planet carrier (18) and rotates together therewith about the axis of rotation (A), and
wherein one of the two output parts (6, 7) is connected to an intermediate shaft (23) extending through the hollow shaft (10) of the electric machine (3);
wherein the housing assembly (8) comprises a first housing part (31) motor sided, a second housing part (32) gearing sided, and an intermediate housing part (33) arranged between the first housing part (31) and the second housing part (32), wherein the intermediate housing part (33) comprises an intermediate wall (34) which spatially separates a motor chamber (35) and a gearing chamber (36), wherein a lubricant (25) is contained in the gearing chamber (36), wherein the intermediate housing part (33), integrally formed with the intermediate wall (34), comprises a motor-side jacket portion (37) which extends from the intermediate wall (34) axially into the outer jacket portion (42) of the first housing part (31), and a gearing-side jacket portion (38) which extends from the intermediate wall (34) axially in direction of the second housing part (32) and is at least indirectly connected therewith, and
wherein a sealed cavity (44) for a through-flowing coolant is formed between an outer face (43) of the motor-side jacket portion (37) and an inner face (41) of the first housing part (31),
**characterized in**
**that** the gearing-side jacket portion (38) of the intermediate housing part (33) extends axially beyond an engagement plane (E) in which the sun gear (15) is in toothed engagement with the planet gears (17), with the intermediate housing part (33) forming a thermal bridge between gearing unit and machine unit.

2. Electric drive according to claim 1,
**characterized in**
**that** in the gearing chamber (36) the inner surface (51) of the intermediate housing part (33) forms at least 30% of the total inner surface of the housing portion enclosing the gearing chamber (36).

3. Electric drive according to any one of claims 1 to 2,
**characterized in**
**that** the axial length of the gearing-side jacket portion (38) is at least 0.15 times, in particular at least 0.2 times, the axial length of the motor-side jacket portion (37).

4. Electric drive according to any one of claims 1 to 3,
**characterized in**
**that** the intermediate housing part (33) has, in an upper half of the housing assembly (8), an oil-collecting chamber (52) which is at least partially in axial overlap with the planet gears (17), wherein coolant splashing around from the planet gears (17) during rotation of the planet carrier (18) is temporarily stored in the oil-collecting chamber (52).

5. Electric drive according to any one of claims 1 to 4,
**characterized in**
**that** the second housing part (32) has, in a lower housing half, an intermediate chamber (66) which is located above a deepest collecting region (67) of the gearing chamber (36), wherein lubricant (25) is temporarily stored in the intermediate chamber (66) during operation of the electric drive.

6. Electric drive according to claim 4, and optionally claim 5,
**characterized in**
**that** the planet carrier (18) and the input part (19) of the power distribution unit (5) are fixedly connected to each other and form a carrier element (50), wherein a first end of the carrier element (50) is rotatably mounted at the intermediate housing part (33) by a first carrier bearing (30), and a second end of the carrier element (50) is rotatably mounted at the second housing part (32) by a second carrier bearing (65),
wherein a gearing side fluid channel (62) is provided, which fluidically connects the oil collecting chamber (52) with the second carrier bearing (65).

7. Electric drive according to claim 6,
**characterized in**
**that** the intermediate wall (34) includes a sleeve portion (40) with an inner bearing seat for a shaft bearing (12) of the hollow shaft (10) and with an outer bearing seat for the first carrier bearing (30) of the carrier element (50), wherein the shaft bearing (12) of the hollow shaft (10) and the first carrier bearing (30) of the carrier element (50) at least partially overlap each other axially.

8. Electric drive according to claim 4, and optionally to any one of claims 5 to 7, **characterized in**
**that** the intermediate shaft (23) is rotatably supported by a bearing (46) in a sleeve projection (58) of the first housing part (31),
wherein a motor-side fluid channel (55) is provided, which fluidically connects the oil collecting chamber (52) with the sleeve projection (58) of the first housing part (31) for lubricating the bearing (46).

9. Electric drive according to any one of claims 1 to 8,
**characterized in**
**that** the electric machine (3) is configured in the form of an asynchronous machine.

10. Electric drive according to any one of claims 1 to 9,
**characterized in**
**that** the hollow shaft (10) has a first end portion (60) with a conical inner face (61) which widens in the axial direction from an annular opening (57) between the hollow shaft (10) and the intermediate shaft (23),
wherein the conical inner face (61) extends from the annular opening (57) in particular to behind the first shaft bearing (11).

11. Electric drive according to claim 10,
**characterized in**
**that** the sun gear (15) has a connecting portion which is inserted into the hollow shaft (10) and is connected therewith in a rotationally fixed manner by shaft splines (14), wherein the shaft splines (14) are lubricated by the lubricant flowing therethrough.

12. Electric drive according to any one of claims 1 to 11,
**characterized in**
**that** the power distribution unit (5) is configured as a differential gearing, wherein the input part (19) connected to the planet carrier (18) is configured as a differential cage and the two output parts (21, 22) are configured as side shaft gears.

13. Electric drive according to any one of claims 1 to 12,
**characterized in**
**that** the planet gears (17) of the planetary gearing (4) are configured as double planet gears and each have a first planet toothing (47) engaging with the sun gear (15) and a second planet toothing (48) engaging with the ring gear (16), wherein the first planet toothing (47) and the second planet toothing (48) are each configured as helical toothing such that the axial forces acting from the sun gear (15) on the first planet toothing (47), and the axial forces acting from the ring gear (16) on the second planet toothing (47), are directed in opposite directions.

14. Electric drive according to any one of claims 1 to 13,
**characterized in**
**that** the ring gear (16) is connected to the second housing part (32) by screws (49) which are screwed axially into the second housing part (32), wherein the screw heads of the screws (49) are arranged at least mostly, in particular completely, within an axial extension of the ring gear (16).

## Revendications

1. Entraînement électrique destiné à propulser un véhicule automobile , comprenant :
un ensemble de carter (8) ;
une machine électrique (3) comportant un arbre moteur réalisé sous la forme d'un arbre creux (10), qui peut être entraîné en rotation par la machine électrique (3) autour d'un axe de rotation (A) ;
un engrenage planétaire (4) comprenant une roue solaire (15), une couronne dentée (16), plusieurs pignons satellites (17) ainsi qu'un porte-satellites (18), la roue solaire (15) pouvant être entraînée en rotation par l'arbre creux (10) autour de l'axe de rotation (A), et la couronne dentée (16) étant maintenue fixe en rotation dans l'ensemble de carter (8),
une unité de dérivation de puissance (5) comprenant une partie d'entrée (19) et deux parties de sortie (6, 7),
la partie d'entrée (19) étant reliée au porte-satellites (18) et tournant conjointement avec celui-ci autour de l'axe de rotation (A), et
l'une des deux parties de sortie (6, 7) étant reliée à un arbre intermédiaire (23) qui s'étend à travers l'arbre creux (10) de la machine électrique (3) ;
l'ensemble de carter (8) comportant une première partie de carter (31) côté moteur, une deuxième partie de carter (32) côté transmission, et une partie intermédiaire de carter (33) disposée entre la première partie de carter (31) et la deuxième partie de carter (32), la partie intermédiaire de carter (33) comportant une cloison (34) qui sépare spatialement un compartiment moteur (35) et un compartiment de transmission (36), le compartiment de transmission (36) contenant un lubrifiant (25),
la partie intermédiaire de carter (33), formée d'un seul tenant avec la cloison (34), comportant une partie d'enveloppe côté moteur (37) qui s'étend axialement depuis la cloison (34) vers l'intérieur de la partie d'enveloppe extérieure (42) de la première partie de carter (31), et une partie d'enveloppe côté transmission (38) qui s'étend axialement depuis la cloison (34) en direction de la deuxième partie de carter (32) et qui est reliée à celle-ci au moins indirectement, et
une cavité étanche (44) pour un fluide de refroidissement circulant étant formée entre une surface extérieure (43) de la partie d'enveloppe côté moteur (37) et une surface intérieure (41) de la première partie de carter (31),
**caractérisé en ce**
**que** la partie d'enveloppe côté transmission (38) de la partie intermédiaire de carter (33) s'étend axialement au-delà d'un plan d'engrènement (E) dans lequel la roue solaire (15) est en prise avec les pignons satellites (17), la partie intermédiaire de carter (33) formant un pont thermique entre l'unité de transmission et l'unité de moteur.

2. Entraînement électrique selon la revendication 1,
**caractérisé en ce**
**que**, dans la chambre de transmission (36), la surface intérieure (51) de la partie intermédiaire de carter (33) forme au moins 30 % de la surface intérieure totale de la partie de carter entourant la chambre de transmission (36).

3. Entraînement électrique selon l'une des revendications 1 à 2,
**caractérisé en ce**
**que** la longueur axiale de la partie d'enveloppe côté transmission (38) est au moins égale à 0,15 fois, en particulier à au moins 0,2 fois, la longueur axiale de la partie d'enveloppe côté moteur (37).

4. Entraînement électrique selon l'une des revendications 1 à 3,
**caractérisé en ce**
**que** la partie intermédiaire de carter (33) comporte, dans une moitié supérieure de l'ensemble de carter (8) une chambre de récupération d'huile (52) qui recouvre au moins partiellement les pignons satellites (17) dans le sens axial, le liquide de refroidissement projeté par les pignons satellites (17) lors de la rotation du porte-satellites (18) étant temporairement stocké dans la chambre de récupération d'huile (52).

5. Entraînement électrique selon l'une des revendications 1 à 4,
**caractérisé en ce**
**que** la deuxième partie de carter (32) comporte, dans une moitié inférieure du carter, une chambre intermédiaire (66) située au-dessus du point de collecte le plus bas (67) de la chambre de transmission (36), le lubrifiant (25) étant temporairement stocké dans la chambre intermédiaire (66) lors du fonctionnement du moteur électrique.

6. Entraînement électrique selon la revendication 4 et, en option, également selon la revendication 5,
**caractérisé en ce que** le porte-satellites (18) et la partie d'entrée (19) de l'unité de dérivation de puissance (5) sont reliés de manière fixe l'un à l'autre et forment un élément de support (50), une première extrémité de l'élément de support (50) étant montée de manière rotative sur la partie intermédiaire de carter (33) au moyen d'un premier palier de support (30), et une deuxième extrémité de l'élément de support (50) étant montée de manière rotative sur la deuxième partie de carter (32) au moyen d'un deuxième palier de support (65),
un canal de fluide (62) côté transmission étant prévu, qui relie la chambre de récupération d'huile (52) au deuxième palier de support (65) sur le plan fluidique.

7. Entraînement électrique selon la revendication 6,
**caractérisé en ce**
**que** la cloison (34) comporte une partie en forme de manchon (40) avec un logement de palier intérieur pour un palier d'arbre (12) de l'arbre creux (10) et avec un logement de palier extérieur pour le premier palier de support (30) de l'élément de support (50), le palier d'arbre (12) de l'arbre creux (10) et le premier palier de support (30) de l'élément de support (50) se recouvrent au moins partiellement dans le sens axial.

8. Entraînement électrique selon la revendication 4 et, en option, également selon l'une des revendications 5 à 7,
**caractérisé en ce**
**que** l'arbre intermédiaire (23) est monté de manière rotative au moyen d'un palier (46) dans un embout tubulaire (58) de la première partie de carter (31), un canal de fluide (55) côté moteur étant prévu, qui relie de manière fluidique la chambre de récupération d'huile (52) à l'embout tubulaire (58) de la première partie de carter (31) pour la lubrification du palier (46).

9. Entraînement électrique selon l'une des revendications 1 à 8,
**caractérisé en ce**
**que** la machine électrique (3) est conçue sous la forme d'une machine asynchrone.

10. Entraînement électrique selon l'une des revendications 1 à 9,
**caractérisé en ce**
**que** l'arbre creux (10) présente une première partie d'extrémité (60) avec une surface intérieure conique (61) qui s'élargit dans le sens axial à partir d'une embouchure annulaire (57) entre l'arbre creux (10) et l'arbre intermédiaire (23), la surface intérieure conique (61) s'étendant, à partir de l'embouchure annulaire (57), notamment jusqu'au-delà du premier palier d'arbre (11).

11. Entraînement électrique selon la revendication 10,
**caractérisé en ce**
**que** la roue solaire (15) comporte une partie de raccordement qui est emboîtée dans l'arbre creux (10) et reliée à celui-ci de manière solidaire en rotation au moyen d'une denture d'arbre (14), la denture d'arbre (14) étant lubrifiée par du lubrifiant s'écoulant à travers celle-ci.

12. Entraînement électrique selon l'une des revendications 1 à 11,
**caractérisé en ce**
**que** l'unité de dérivation de puissance (5) est conçue comme un différentiel, la partie d'entrée (19) reliée au porte-satellites (18) étant conçue comme une cage de différentiel et les deux parties de sortie (21, 22) comme des pignons latéraux.

13. Entraînement électrique selon l'une des revendications 1 à 12,
**caractérisé en ce**
**que** les pignons satellites (17) de l'engrenage planétaire (4) sont réalisés sous forme de pignons satellites doubles et présentent chacun une première denture des pignons satellites (47) qui engrène avec la roue solaire (15) et une deuxième denture des pignons satellites (48) qui engrène avec la couronne dentée (16),
la première denture planétaire (47) et la deuxième denture planétaire (48) étant chacune conçues comme des dentures hélicoïdales de telle sorte que les forces axiales exercées par la roue solaire (15) sur la première denture planétaire (47) et celles exercées par la couronne dentée (16) sur la deuxième denture planétaire (48) soient orientées en sens opposé.

14. Entraînement électrique selon l'une des revendications 1 à 13,
**caractérisé en ce**
**que** la couronne dentée (16) est reliée à la deuxième partie de carter (32) au moyen de vis (49) qui sont vissées axialement dans la deuxième partie de carter (32), les têtes des vis (49) se trouvant au moins en grande partie, en particulier entièrement, à l'intérieur d'une extension axiale de la couronne dentée (16).
